# EUROPÄISCHE PATENTSCHRIFT

(11) **EP 1 136 126 B1**
(45) Veröffentlichungstag und Bekanntmachung des Hinweises auf die Patenterteilung: **29.09.2004**
(21) Anmeldenummer: 01103225.7
(22) Anmeldetag: 10.02.2001
(51) Int. Cl.: B01L 3/02, G01N 35/10, B01L 11/00

(54) **Dosiervorrichtung für insbesondere zähflüssige Flüssigkeiten**
Dosing device, in particular for viscous liquids
Dispositif de dosage, en particulier pour liquides visqueux

(30) Priorität: 20.03.2000 DE 10013528
(43) Veröffentlichungstag der Anmeldung: 26.09.2001
(73) Patentinhaber: BRAND GMBH + CO KG, 97877 Wertheim (DE)
(72) Erfinder: Lang, Andreas, 97828 Marktheidenfeld (DE); Mahler, Peter H., 97892 Kreuzwertheim (DE)
(74) Vertreter: Gesthuysen, von Rohr & Eggert

(56) Entgegenhaltungen:
- EP-A- 0 545 560
- US-A- 4 702 889
- US-A- 5 062 547
- US-A- 5 193 403

## Beschreibung

Gegenstand der Erfindung ist eine Dosiervorrichtung für Flüssigkeiten wie sie in Produktionsstätten der Industrie aber auch in Labors eingesetzt wird. Die vorliegende Dosiervorrichtung ist insbesondere für zähflüssige Flüssigkeiten bestimmt und geeignet, ebenso für in andererer Weise schwierig zu dosierende Flüssigkeiten. Insbesondere bestimmt ist die erfindungsgemäße Dosiervorrichtung auch für steril zu dosierende Flüssigkeiten.

Die Lehre der Erfindung geht aus von einer Dosiervorrichtung für Flüssigkeiten mit den Merkmalen des Oberbegriffs von Anspruch 1.

Eine solche Dosiervorrichtung erlaubt es, mit einer Mehrzahl von gleichzeitig betätigten Dosierpumpen gleichzeitig eine Mehrzahl gleicher Flüssigkeitsvolumina in eine entsprechende Anzahl von Aufnahmebehältern hinein zu dosieren. Die Dosiervorrichtung weist dazu also eine Mehrzahl gleichartiger Dosierpumpen auf, mit denen gleichzeitig eine Vielzahl gleicher Volumina der Flüssigkeit aufgenommen oder abgegeben werden können. Angestrebt ist, daß die Dosiervorrichtung zwischenzeitlich gereinigt und gespült werden kann.

Die Dosiervorrichtung für Flüssigkeiten, von der die Erfindung ausgeht (US 4,008,003 A), weist zwei gleichzeitig zu betätigende und jeweils wieder doppelt wirkende Dosierpumpen in Form sogenannter Taumelkolbenpumpen auf. Jede Dosierpumpe weist einen doppelt wirkenden Kolben und einen den Kolben abdichtend aufnehmenden Zylinder mit je Kolbenende zwei außenseitigen Anschlüssen auf. Die Anschlüsse sind miteinander und mit Zuführ- und Abführleitungen verbunden.

Zwar kann man mit einer solchen Dosiervorrichtung vergleichsweise genau dosieren. Es ist aber schwierig, eine solche Dosiervorrichtung mit derartig aufgebauten Dosierpumpen zwischenzeitlich wirksam zu reinigen und zu spülen. Die Komplexität der Gesamtanordnung und insbesondere die verwinkelte Führung einer Vielzahl von Kanälen macht hier große Probleme. Das ist insbesondere dann schwierig, wenn man es mit problematischen, insbesondere zähflüssigen und/oder steril zu dosierenden Flüssigkeiten zu tun hat. Es hat sich gezeigt, daß derartige Dosiervorrichtungen in der Praxis nicht zufriedenstellend arbeiten.

Hinsichtlich der Reinigung bzw. Spülung hat sich dabei auch als nachteilig erwiesen, daß auch eine Spülflüssigkeit nur durch die Pumpwirkung der Taumelkolbenpumpen durch das System gefördert werden kann. Die Reinigungswirkung ist daher durchaus begrenzt.

Der Lehre der Erfindung liegt somit das Problem zugrunde, eine Dosiervorrichtung für Flüssigkeiten, insbesondere für problematische Flüssigkeiten der in Rede stehenden Art, anzugeben, die in ihrer Handhabung, insbesondere hinsichtlich der Spülung bzw. Reinigung verbessert ist.

Die erfindungsgemäße Dosiervorrichtung löst die zuvor aufgezeigte Problemstellung durch die Merkmale des kennzeichnenden Teils von Anspruch 1. Die Lehre der Erfindung ist grundsätzlich mit Vorteil realisierbar bereits bei einer Dosiervorrichtung mit nur einer Dosierpumpe. Insbesondere ist die Lehre der Erfindung aber vorteilhaft realisierbar bei Dosiervorrichtungen mit einer Mehrzahl von dort integrierten Dosierpumpen. Bei einer Dosiervorrichtung mit mehreren Dosierpumpen kommt nämlich dem Wegfall externer Verbindungsleitungen zwischen den Dosierpumpen konstruktiv, handhabungstechnisch und reinigungstechnisch erhebliche Bedeutung zu.

Erfindungsgemäß werden die Kanäle einer eine Dosierpumpe oder mehrere Dosierpumpen umfassenden Dosiervorrichtung in der Pumpenaufnahmeplatte und der Dosierkanalplatte ausgebildet, die durch aneinander anliegende Dichtflächen die gewünschten Dichtungen an allen interessierenden Stellen bilden können. Die Verteilung der Kanäle auf die Pumpenaufnahmeplatte und die Dosierkanalplatte schafft die Voraussetzung dafür, ein Durchströmungssystem für die Reinigung der Dosiervorrichtung zu verwirklichen. Mittels des Umwegkanals mit Mündungsöffnungen in der Dichtfläche auf der Unterseite der Pumpenaufnahmeplatte können nämlich die Mündungsöffnungen des zugeordneten Dosierkanals und Zuführkanals ggf. miteinander verbunden werden. Dadurch schafft man die Möglichkeit einer durchgehenden Spülung der Kanäle der erfindungsgemäßen Dosiervorrichtung. Voraussetzung dafür ist allerdings, daß die Dosierkanalplatte auf der Oberseite tatsächlich eine plane, an der Unterseite der Pumpenaufnahmeplatte abdichtend anliegende Dichtfläche aufweist. Die durchgehende Spülung der Kanäle ist reinigungstechnisch wesentlich wirksamer als eine Spülung im Takt einzelner Pumpenhübe wie sie im Stand der Technik lediglich möglich ist. Interessant ist im übrigen auch, daß die erfindungsgemäße Dosiervorrichtung es erlaubt, in der Spülstellung die Dosierpumpen arbeiten zu lassen, also die Spülströmung bei laufender Pumpenfunktion zu realisieren.

Konstruktiv ist die erfindungsgemäße Dosiervorrichtung wegen ihrer einfachen, verwinklungsfreien Kanalführung äußerst zweckmäßig.

Besondere Bedeutung kommt im übrigen der Lehre des Anspruchs 10 zu. Eine solche Hinterspülung der Dichtflächen ist für eine Vielzahl problematischer Anwendungsfälle, insbesondere für steril zu dosierende Flüssigkeiten, von erheblichem Interesse.

Bevorzugte Ausgestaltungen und Weiterbildungen der Lehre sind Gegenstand der Unteransprüche.

Im folgenden wird die Erfindung anhand einer lediglich Ausführungsbeispiele darstellenden Zeichnung erläutert. In der Zeichnung zeigt
- Fig. 1: ein erstes Ausführungsbeispiel einer erfindungsgemäßen Dosiervorrichtung mit Linearverschiebung der Dosierkanalplatte gegenüber der Pumpenaufnahmeplatte,
- Fig. 2: ausschnittweise die Dosiervorrichtung aus Fig. 1 in Dosierstellung,
- Fig. 3: in einer Fig. 2 entsprechenden Darstellung die Dosiervorrichtung aus Fig. 1 in Ansaugstellung,
- Fig. 4: in einer Fig. 2 entsprechenden Darstellung die Dosiervorrichtung aus Fig. 1 in Spülstellung,
- Fig. 5: in schematischer Darstellung, ebenso ausschnittweise wie Fig.4, ein weiteres Ausführungsbeispiel einer erfindungsgemäßen Dosiervorrichtung in Spülstellung,
- Fig. 6: die Pumpenaufnahmeplatte der Dosiervorrichtung gemäß dem Ausführungsbeispiel von Fig. 5 in einer Ansicht von der Unterseite her.

Dargestellt ist eine Dosiervorrichtung für Flüssigkeiten. Insbesondere handelt es sich um eine Dosiervorrichtung für problematische Flüssigkeiten, beispielsweise für zähflüssige, für unter Luftzufuhr aushärtende und/oder für steril zu dosierende Flüssigkeiten.

Beispielsweise kann es sich um unter Luftzufuhr aushärtenden, flüssigen Einkomponenten-Kunststoff handeln, der zähflüssig ist und steril in Aufnahmebehälter, beispielsweise zur Herstellung von Pharma-Medizinprodukten, dosiert werden muß. Es ist unschwer verständlich, daß die automatische Dosierung einer solchen Flüssigkeit mit einer Dosiervorrichtung mit einer Mehrzahl gleichzeitig zu betätigender Dosierpumpen sehr hohe Anforderungen an die Konstruktion der Dosiervorrichtung stellt. Insbesondere muß die Dosiervorrichtung mit möglichst wenig Ventilen auskommen, möglichst überall sollten reine Flächendichtungen verwirklicht sein. Außerdem muß die Dosiervorrichtung möglichst effektiv gegen den Eintritt von Luft und/oder Bakterien geschützt sein. Jedenfalls gilt das für die Flüssigkeitskanäle in der Dosiervorrichtung. Schließlich soll und muß eine wirksame Spülung der Flüssigkeitskanäle in der Dosiervorrichtung ohne kompletten Auseinanderbau der Dosiervorrichtung möglich sein.

Die zuvor erläuterten Probleme gelten an sich auch bereits bei einer Dosiervorrichtung mit nur einer Dosierpumpe und sind erfindungsgemäß einer Lösung auch für eine Dosiervorrichtung mit nur einer Dosierpumpe zugeführt worden. Die Überlegungen zur vorliegenden Erfindung gelten daher auch für eine Dosiervorrichtung mit nur einer Dosierpumpe, auch wenn Sie nachfolgend am bevorzugten Ausführungsbeispiel einer Dosiervorrichtung mit mehreren Dosierpumpen erläutert werden.

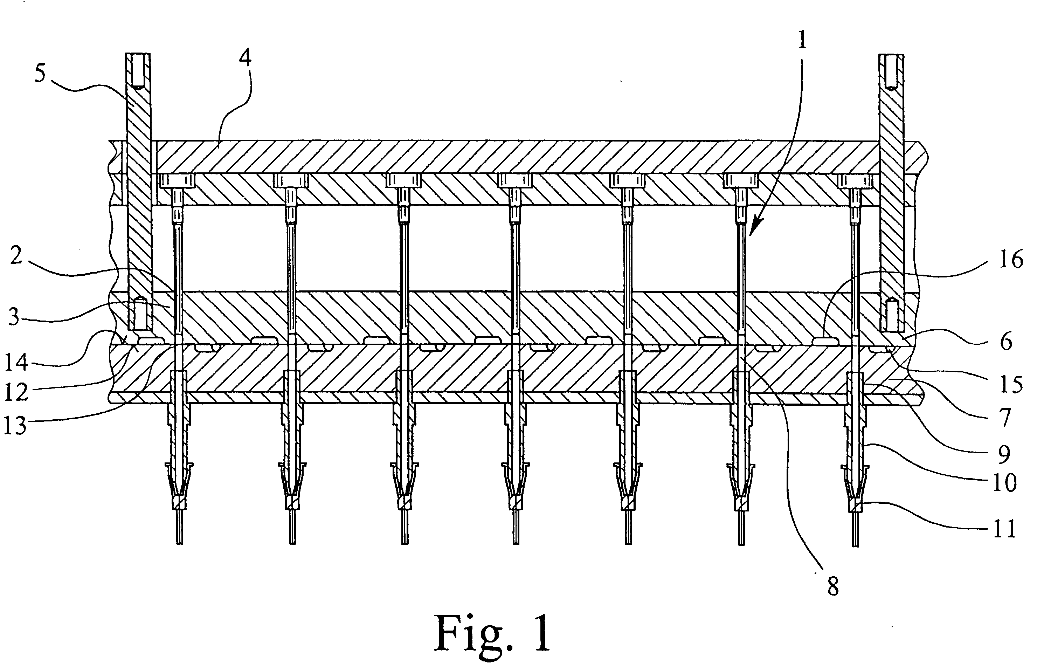

Fig. 1 zeigt nun die erfindungsgemäße Dosiervorrichtung in einem ersten Ausführungsbeispiel mit einer Mehrzahl von gleichzeitig zu betätigenden Dosierpumpen 1. Diese sind im dargestellten Ausführungsbeispiel als Kolben-Zylinder-Anordnungen mit Kolben 2 und in eine Gesamtanordnung integrierten Zylindern 3 ausgeführt. Im dargestellten Ausführungsbeispiel hat die Dosiervorrichtung insgesamt in einer Reihe sieben Dosierpumpen 1, die Dosiervorrichtung kann insgesamt einreihig oder mehrreihig ausgeführt sein.

In Fig. 1 erkennt man eine Brücke 4 für die Kolben 2 der die Dosierpumpen 1 bildenden Kolben-Zylinder-Anordnungen, durch die die Kolben 2 der verschiedenen Dosierpumpen 1 miteinander zu synchroner Bewegung verbunden sind. Die Brücke 4 ist an Führungen 5 in vertikaler Richtung geführt und kann von einem hier nicht weiter dargestellten motorischen Antrieb in vertikaler Richtung bewegt werden.

Vorgesehen in der Dosiervorrichtung ist eine Pumpenaufnahmeplatte 6, von der die Dosierpumpen 1 getragen werden. Ferner ist vorgesehen eine zur Pumpenaufnahmeplatte 6 parallel liegende Dosierkanalplatte 7, in der den Dosierpumpen 1 zugeordnete Dosierkanäle 8 angeordnet sind.

Jeder Dosierkanal 8 hat im dargestellten und insoweit bevorzugten Ausführungsbeispiel am unteren Ende eine Aufnahme 9, in der im dargestellten Ausführungsbeispiel ein längerer, nach unten ragender Führungsschaft 10, den Dosierkanal 8 fortsetzend angebracht ist. Am Führungsschaft 10 sitzt am unteren Ende eine separat aufzustekkende, hochpräzise Auslaufspitze 11, die im dargestellten Ausführungsbeispiel der präzisen Einbringung der zähflüssigen, steril zu dosierenden Flüssigkeit in entsprechende Form-Aufnahmebehälter dient. Bei dem erläuterten Beispiel handelt es sich bei der Flüssigkeit um einen zähflüssigen Einkomponenten-Kunststoff, der steril in Aufnahmebehälter dosiert wird.

Aus den im allgemeinen Teil der Beschreibung erläuterten Gründen weist die Pumpenaufnahmeplatte 6 auf der Unterseite 12 eine plane Dichtfläche auf, in der Mündungsöffnungen 13 der Dosierpumpen 1 angeordnet sind. Dementsprechend weist die Dosierkanalplatte 7 auf der Oberseite 14 eine plane, an der Unterseite 12 der Pumpenaufnahmeplatte 6 abdichtend anliegende Dichtfläche auf. Wir haben es hier also mit einer Flächendichtung zwischen den Platten 6, 7 jedenfalls im Bereich der Mündungsöffnungen zu tun.

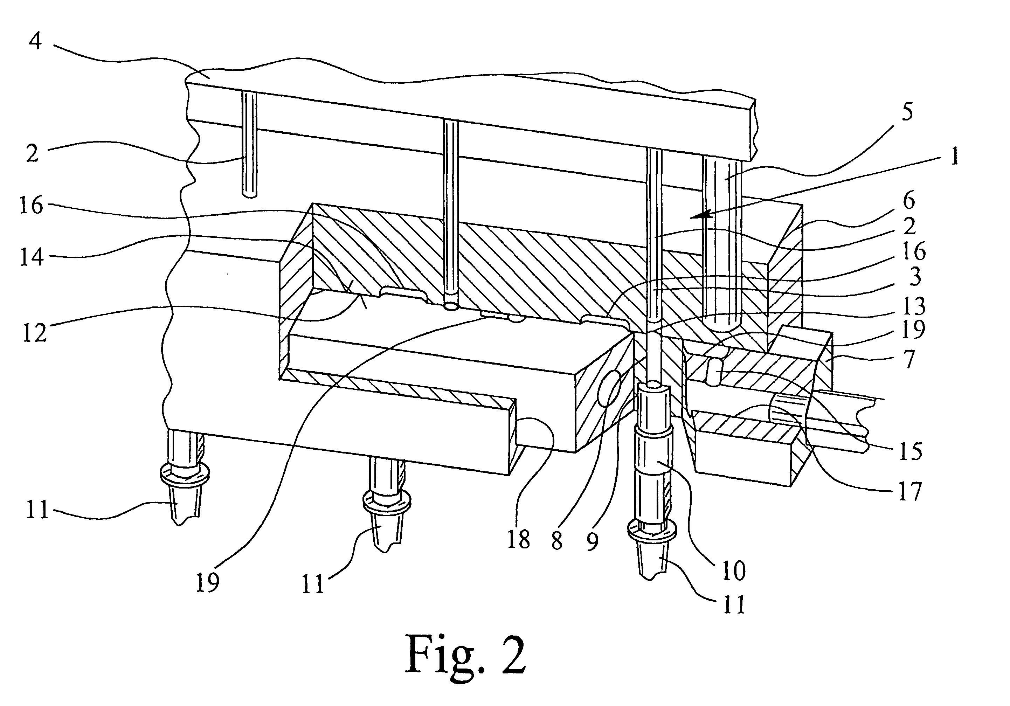

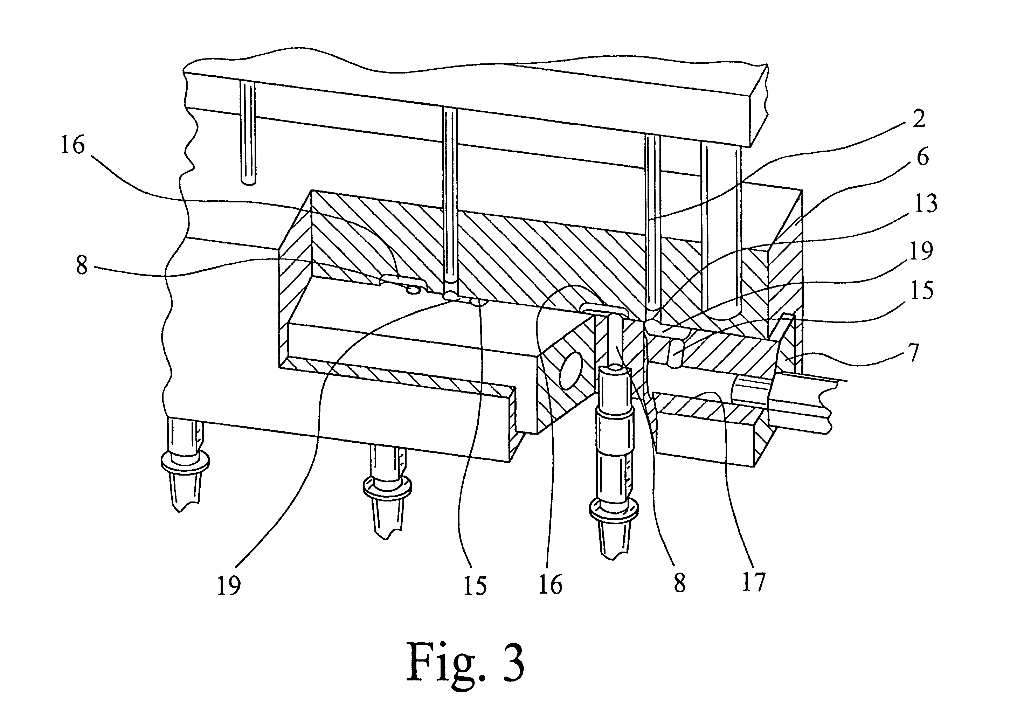

In der Dichtfläche an der Oberseite 14 der Dosierkanalplatte 7 sind zueinander benachbart die Mündungsöffnungen des der Dosierpumpe 1 zugeordneten Dosierkanals 8 und mindestens eines zugeordneten Zuführkanals 15 angeordnet. Fig. 2 läßt das in Verbindung mit Fig. 1 gut erkennen. Im dargestellten Ausführungsbeispiel mit in Längsrichtung erfolgender Verschiebung, also von rechts nach links oder umgekehrt in Fig. 1, sind die Pumpenaufnahmeplatte 6 und die Dosierkanalplatte 7 relativ zueinander verschiebbar, so daß die Mündungsöffnungen 13 der Dosierpumpen 1 wahlweise mit den Mündungsöffnungen der zugeordneten Dosierkanäle 8 oder der zugeordneten Zuführkanäle 15 in Überdeckung bringbar sind. Damit hat man einmal die Dosierstellung (Fig. 1 und 2), im anderen Fall die Ansaugstellung (Fig. 3).

Ferner ist vorgesehen, daß in der Pumpenaufnahmeplatte 6 benachbart zu der entsprechenden Mündungsöffnung 13 jeweils mindestens ein der Dosierpumpe 1 zugeordneter Umwegkanal 16 mit Mündungsöffnungen in der Dichtfläche auf der Unterseite 12 der Pumpenaufnahmeplatte 6 angeordnet ist und daß durch Relativverschiebung der Pumpenaufnahmeplatte 6 und der Dosierkanalplatte 7 gegeneinander die Mündungsöffnungen des Umwegkanals 16 in eine Stellung bringbar sind, in der der Umwegkanal 16 den zugeordneten Dosierkanal 8 mit dem zugeordneten Zuführkanal 15 verbindet. Diese Konzeption kann in gleicher Weise auch bei einer Dosiervorrichtung mit nur einer Dosierpumpe 1 realisiert werden, das ist bereits oben angesprochen worden.

Die Umwegkanäle 16 erkennt man in Fig. 1 an allen Positionen der sieben Dosierpumpen 1. Sie sind in der Pumpenaufnahmeplatte 6 angeordnet, weil sie so die Aufgabe erfüllen können, die der jeweiligen Position zugeordneten Kanäle 8, 15 in der Dosierkanalplatte 7 bedarfsweise miteinander zu verbinden. Damit schafft man eine direkte Durchströmungsmöglichkeit aller Kanäle 8, 15 in der Dosierkanalplatte 7 unter Nutzung der sie verbindenden Umwegkanäle 16. Natürlich erfordert das insgesamt die Dichtwirkung zwischen der Unterseite 12 der Pumpenaufnahmeplatte 6 und der Oberseite 14 der Dosierkanalplatte 7, erfordert dort also aneinander abdichtend anliegende Dichtflächen mit vergleichsweise hoher Ebenheit.

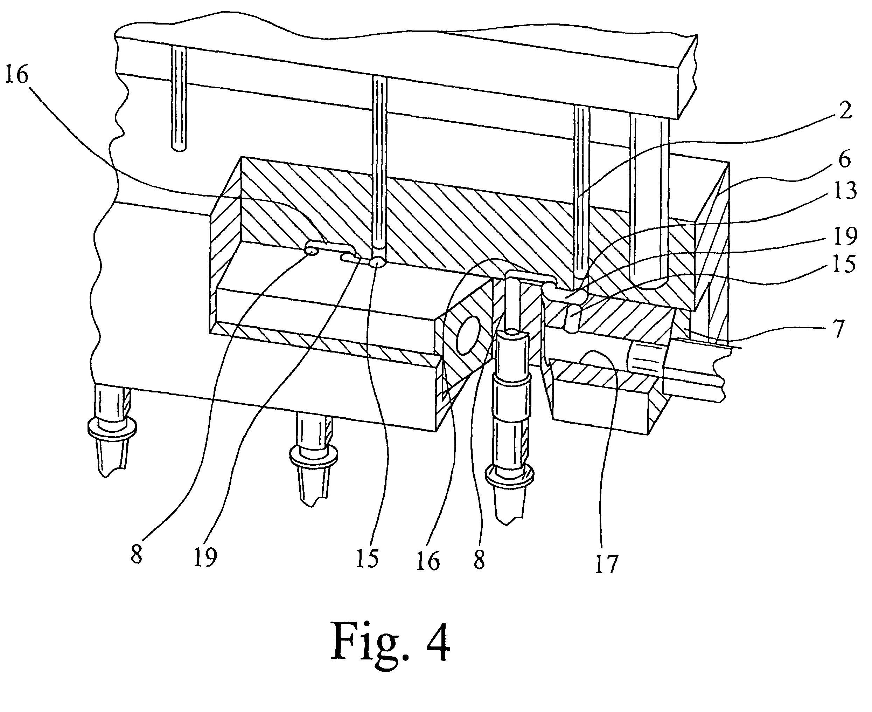

In der in Fig. 4 dargestellten Position der Dosierkanalplatte 7 gegenüber der Pumpenaufnahmeplatte 6, in der die Spülfunktion realisiert ist, kann man die Spülung der Kanäle mit einer fortlaufenden Durchströmung mit einem Spülmedium realisieren, ist also nicht darauf angewiesen, die im Stand der Technik realisierte quasi-statische Spülung mit einzelnen Pumpenhüben durchzuführen. Bei laufender Spülung kann man sogar die Dosierpumpen 1 laufen lassen, so daß man eine Spülströmung bei gleichzeitiger Pumpenfunktion mit dann optimaler Spülwirkung realisiert.

Die Anforderungen an die Ebenheit der Dichtflächen haben mit den Eigenschaften der Flüssigkeiten zu tun, die mit der erfindungsgemäßen Dosiervorrichtung dosiert werden sollen. Sehr zähflüssige Flüssigkeiten, die möglicherweise für Luftzutritt oder Eindringen von Bakterien nicht empfindlich sind, lassen geringere Ebenheiten unproblematischer zu als dünnflüssige oder, insbesondere, steril zu dosierende Flüssigkeiten. In der Praxis wird hier der Aufwand der Herstellung besonders ebener Dichtflächen an den Anforderungen orientiert werden.

Die erfindungsgemäß realisierte Konstruktion zeichnet sich durch einen sehr einfachen Aufbau der Dosiervorrichtung mit wenig verwinkelter Strömungsführung aus, bei dem nur eine minimale Anzahl von Verbindungselementen benötigt wird.

Man könnte jeden Zuführkanal 15 in der Dosierkanalplatte 7 mit einem eigenen Anschluß nach außen versehen. Interessant für die optimal gleichmäßige Speisung der Dosierpumpen 1 ist aber eine Gestaltung, die auch im übrigen konstruktive Vorteile hat. Es wird nämlich erfindungsgemäß vorgesehen, daß die oder zumindest mehrere Zuführkanäle 15 an eine gemeinsame Flüssigkeits-Zuführleitung 17 in der Dosierkanalplatte 7 angeschlossen sind. Das vereinfacht auch den Aufbau insbesondere der ohnehin mit Kanälen ja bereits durchsetzten Dosierkanalplatte 7. Das in den Fig. 2 bis 4 dargestellte Ausführungsbeispiel zeigt die Flüssigkeits-Zuführleitung 17 in der Dosierkanalplatte 7 seitlich versetzt zu den in einer Linie angeordneten Dosierkanälen 8 der Dosierpumpen 1. Dementsprechend verlaufen die von der Flüssigkeits-Zuführleitung 17 zur Oberseite 14 der Dosierkanalplatte 7 führenden Zuführkanäle 15 seitlich geneigt bezüglich der Zuführleitung 17 zu den an der Oberseite 14 befindlichen Mündungsöffnungen. Durch diese dreidimensional realisierte Verteilung der verschiedenen Strömungskanäle in der Dosierkanalplatte 7 gelingt es eben, all diese Kanäle ohne wechselseitige Kollision in der Dosierkanalplatte 7 auch bei Anordnung einer Mehrzahl von Dosierpumpen 1 unterzubringen.

Nicht gezeigt ist in der Zeichnung die äußere Peripherie der erfindungsgemäßen Dosiervorrichtung, die entsprechende Steuerungseinrichtungen zur Strömungssteuerung durch die verschiedenen Kanäle umfassen muß, um auch die verschiedenen Funktionen "Ansaugen", "Dosieren" und "Spülen" umsetzen zu können.

Hinsichtlich der Relativbewegung der Pumpenaufnahmeplatte 6 und der Dosierkanalplatte 7 gegeneinander kann man eine Drehbewegung realisieren wie sie als solche insbesondere von Scheibenventilen seit Jahrzehnten bekannt ist (EP 0 399 947 Al, US 4,702,889 A, EP 0 454 691 B1). Natürlich sind Scheibenventile der in Rede stehenden Art in verschiedensten Ausführungsformen bekannt, regelmäßig aber nicht innerhalb einer Dosiervorrichtung mit einer Mehrzahl von gleichzeitig zu betätigenden Dosierpumpen. Scheibenventile sind eben Ventile und insoweit zusätzliche, hochpräzise Bauteile mit selbstdichtend aneinander anliegenden Dichtflächen. Sie werden häufig aus Keramik hergestellt, um die in manchen Bereichen erforderlichen hohen Ebenheiten realisieren zu können.

Das dargestellte und bevorzugte Ausführungsbeispiel einer erfindungsgemäßen Dosiervorrichtung zeichnet sich hinsichtlich der Relativbewegung der Pumpenaufnahmeplatte 6 und der Dosierkanalplatte 7 dadurch aus, daß diese mittels einer Linearbewegung relativ zueinander verschiebbar sind. Das hat für die vorliegende Konstruktion mit einer relativ geringen Anzahl von gleichzeitig zu betätigenden Dosierpumpen 1 erhebliche konstruktive Vorteile. Insbesondere läßt sich die Führung der Dosierkanalplatte 7 mittels einer Führungsaufnahme 18 an der Pumpenaufnahmeplatte 6 vergleichsweise einfach realisieren. Man erkennt das U-förmige, beidseits hinterschnittene Führungsprofil der Führungsaufnahme 18 insbesondere in den Fig. 2 bis 4.

Die Fig. 2 bis 4 zeigen ferner besonders deutlich noch eine Besonderheit der erfindungsgemäßen Dosiervorrichtung, der in konstruktiver Hinsicht erhebliche Bedeutung zukommt. Es ist nämlich vorgesehen, daß der Umwegkanal 16 als zur Unterseite 12 der Pumpenaufnahmeplatte 6 offene Nut ausgeführt ist und die Mündungsöffnungen einfach von der offenen Seite der Nut gebildet sind. Die Mündungsöffnungen des Umwegkanals 16 werden damit also praktisch durch die Mündungsöffnungen des Dosierkanals 8 bzw. des Zuführkanals 15 der zugeordneten Dosierpumpe 1 "gebildet".

Fig. 1 zeigt für den Zuführkanal 15 ferner, daß der Zuführkanal 15 einen als zur Oberseite 14 der Dosierkanalplatte 7 offene Nut ausgebildeten Abschnitt 19 aufweist und die Mündungsöffnung dieses Abschnittes 19 einfach von der offenen Seite dieser Nut gebildet ist. Damit kann man auch hier eine gewisse Überdeckung in der gewünschten Weise bei vorgegebener Linearverschiebung der Dosierkanalplatte 7 gegenüber der Aufnahmeplatte 6 realisieren.

Nicht dargestellt ist in der Zeichnung beider Ausführungsbeispiele, daß man auch weitere Kanäle in der Dosierkanalplatte 7 vorsehen kann, daß man also vorsehen kann, daß in der Dosierkanalplatte 7 je Dosierpumpe 1 ein weiterer Kanal angeordnet ist und der zugeordnete Umwegkanal 16 oder ein zugeordneter weiterer Umwegkanal in der Pumpenaufnahmeplatte 6 den weiteren Kanal in bestimmter Relativlage der Platten 6, 7 mit dem zugeordneten Dosierkanal 8 und/oder Zuführkanal 15 verbindet.

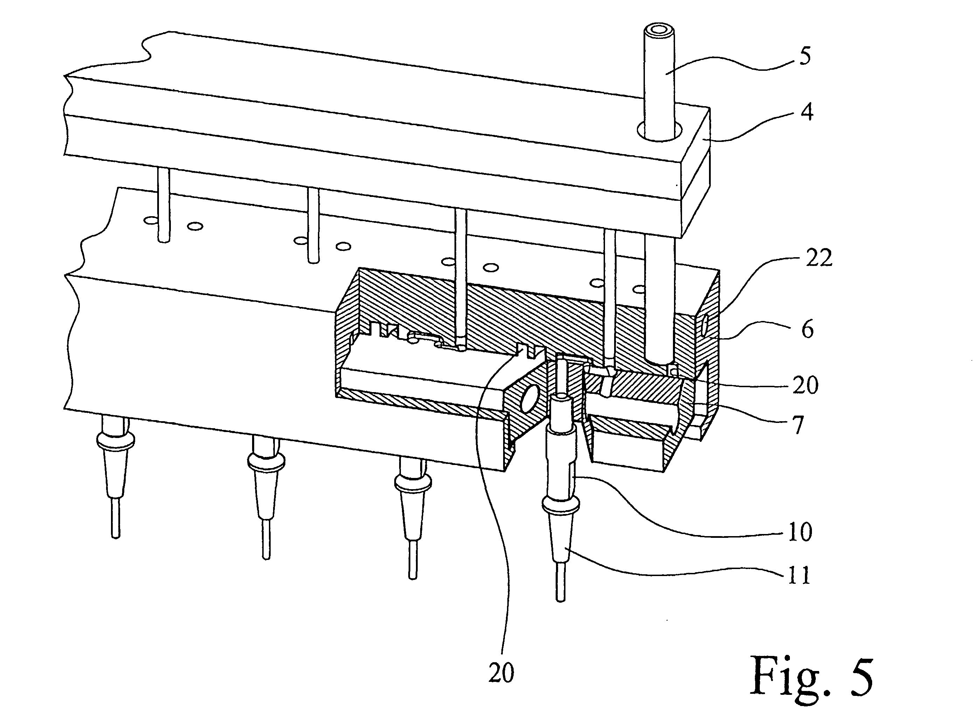

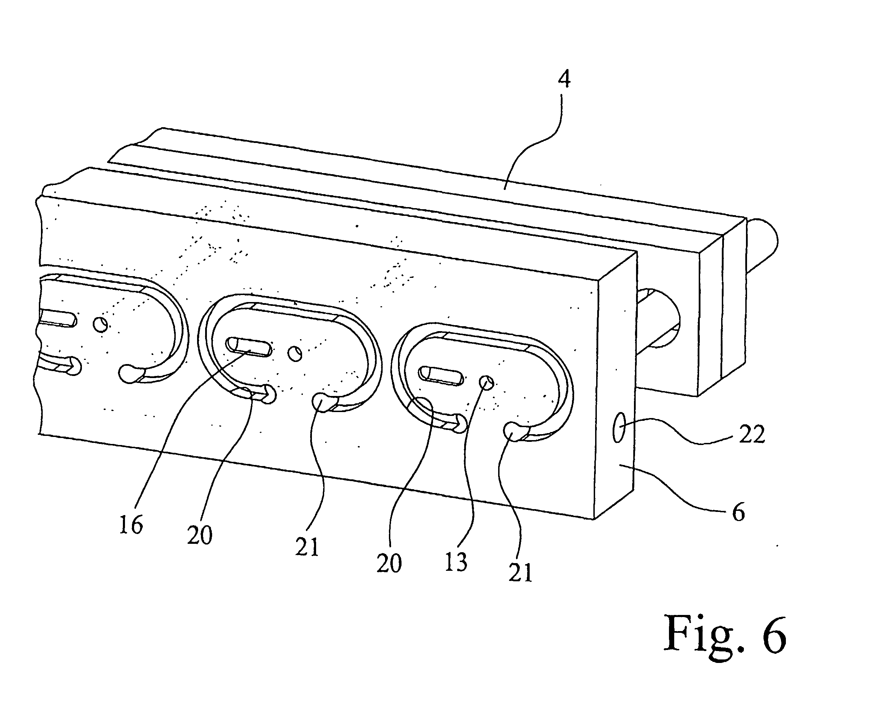

Das in den Fig. 5 und 6 dargestellte weitere Ausführungsbeispiel einer erfindungsgemäßen Dosiervorrichtung unterscheidet sich in seinem grundsätzlichen Aufbau zunächst nicht von dem in den Fig. 1 bis 4 dargestellten Ausführungsbeispiel einer erfindungsgemäßen Dosiervorrichtung. Deshalb sind in den Fig. 5 und 6 nur wenige Bezugszeichen angegeben, die bereits im Zusammenhang mit den Fig. 1 bis 4 angesprochen worden sind. Die Fig. 5 und 6 zeigen aber bei diesem Ausführungsbeispiel einer erfindungsgemäßen Dosiervorrichtung eine Besonderheit, die nachfolgend erläutert werden soll. Fig. 5 zeigt die Spülstellung ähnlich Fig. 4.

In diesem Ausführungsbeispiel ist in der Pumpenaufnahmeplatte 6 auf der Unterseite 12 je Dosierpumpe 1 ein alle dieser Dosierpumpe 1 zugeordneten Mündungsöffnungen ringförmig jedenfalls zum Teil umschließender, als zur Unterseite 12 offene Nut ausgeführter Spülkanal 20 angeordnet, in den über einen zugeordneten Spülanschlußkanal 21 Spülflüssigkeit einströmen und anderenendes über einen weiteren Spülanschlußkanal 21 wieder abströmen kann. Der Spülkanal 20 stellt also eine Art außen umlaufende Ringleitung dar, mit der durch Umströmen mit Spülflüssigkeit jede vielleicht noch verbliebene Undichtigkeit zwischen den Dichtflächen im Bereich der Mündungsöffnungen, die dieser Dosierpumpe 1 zugeordnet sind, aufgefangen werden kann. Beispielsweise bei einem ansonsten unter Luftzufuhr aushärtenden Kunststoff kann mit durchströmender Spülflüssigkeit eine Flüssigkeitsdichtung als Ringdichtung realisiert werden, die jeden Luftzutritt in den Dichtbereich verhindert oder, falls Luft eingetreten sein sollte, durch Kontakt mit beispielsweise Wasser den wasserlöslichen Kunststoff wieder reaktiviert.

Für sich sind Spülkanäle bei Scheibenventilen bekannt (US 4,702,889 A), im Rahmen der Lehre der Erfindung werden diese Spülkanäle aber an bestimmter Stelle, nämlich bezogen auf die jeweilige Dosierpumpe zweckmäßig eingesetzt.

Fig. 5 zeigt an der Oberseite der Pumpenaufnahmeplatte 6 Blindstopfen bzw. Verschlüsse, die die Spülanschlußkanäle 21 dort schließen. Das entspricht einer vorteilhaften Herstellungstechnik für die Spülanschlußkanäle 21. Fig. 5 zeigt, daß die Spülflüssigkeit von einem Zulaufanschluß 22 in der Pumpenaufnahmeplatte 6 aus in den Spülkanal 20 der ersten Dosierpumpe 1 eintritt und diesen durchströmt, endseitig dort wieder austritt und über die Spülanschlußkanäle 21 in der Pumpenaufnahmeplatte 6 in den Spülkanal 20 der folgenden Dosierpumpe 1 eintritt. So durchströmt die Spülflüssigkeit sukzessive die Spülkanäle 20 aller Dosierpumpen 1 und verläßt schließlich die Pumpenaufnahmeplatte 6 am anderen Ende über einen in Fig. 5 nicht erkennbaren Auslaß.

Im übrigen könnte man auch vorsehen, daß auf der Oberseite der Pumpenaufnahmeplatte 6 mit einem entsprechenden Spülkanal eine Hinterspülung und Umspülung der jeweiligen Dosierpumpe 1 erfolgt. Das ist in der Zeichnung allerdings nicht weiter dargestellt.

Die Funktionsweise der Erfindung soll nun noch anhand des ersten, in den Fig. 1 bis 4 dargestellten Ausführungsbeispiels erläutert werden.

Fig. 2 zeigt das Ende des Dosierhubs der Dosiervorrichtung, mit dem die Kolben 2 der Dosierpumpen 1 nach unten bewegt worden sind und die zu dosierende Flüssigkeit kontrolliert durch die Dosierkanäle 8, die Führungsschäfte 10 und die Auslaufspitzen 11 in die nicht dargestellten Aufnahmebehälter dosiert haben.

Fig. 3 zeigt, daß durch Längsverschiebung der Dosierkanalplatte 7 gegenüber der Pumpenaufnahmeplatte 6 von Fig. 2 aus nach links nunmehr der Abschnitt 19 des Zuführkanals 15 mit der Mündungsöffnung 13 der Dosierpumpe 1 in Überdeckung gebracht worden ist. Wird nun die Brücke 4 unter Mitnahme der Kolben 2 nach oben bewegt, so wird aus der gemeinsamen Flüssigkeits-Zuführleitung 17 über die Zuführkanäle 15 die zu dosierende Flüssigkeit in die Zylinder 3 der Dosierpumpen 1 eingesaugt. Das kann natürlich durch einen anstehenden Druck in der Flüssigkeits-Zuführleitung 17 ersetzt oder unterstützt werden.

Fig. 4 zeigt die Stellung der Dosierkanalplatte 7 gegenüber der Pumpenaufnahmeplatte 6, die, durch weitere Verschiebung der Dosierkanalplatte 7 nach links, den Zuführkanal 15 mittels des Umwegkanals 16 mit dem Dosierkanal 8 der zugehörigen Dosierpumpe 1 in Verbindung gebracht hat. In dieser Stellung kann man durch Einführen von Spülflüssigkeit über die gemeinsame Flüssigkeits-Zuführleitung 17 das komplette System spülen, weil alle Kanäle miteinander verbunden sind.

Im dargestellten Ausführungsbeispiel ist auch der Kanal der Dosierpumpe 1 zur Mündungsöffnung 13 mit erfaßt, weil der Zuführkanal 15 einen an der Oberseite 14 der Dosierkanalplatte 7 offenen Abschnitt hat, der es erlaubt, daß der Zuführkanal 15 gleichzeitig sowohl mit dem Umwegkanal 16 als auch mit der Mündungsöffnung 13 der Dosierpumpe 1 in Überdeckung steht.

Man kann bei Durchführung der Spülung also auch die Dosierpumpen 1 in Pumpenfunktion arbeiten lassen und so eine optimale Reinigung auch der Dosierpumpen 1 selbst mit durchströmender Spülflüssigkeit, nicht nur mit Einzelhüben, realisieren.

Für alle Ausführungsbeispiele der vorliegenden Erfindung gilt im übrigen, daß die hohen wünschenswerten Ebenheiten besonders gut dann erreicht werden können, wenn die Dichtflächen an den Platten 6, 7 an keramischem Material mit hoher Ebenheit ausgebildet sind.

## Patentansprüche

1. Dosiervorrichtung für Flüssigkeiten, insbesondere für zähflüssige, vorzugsweise steril zu dosierende Flüssigkeiten,
mit mindestens einer Dosierpumpe (1), vorzugsweise mit einer Mehrzahl von gleichzeitig zu betätigenden Dosierpumpen (1), wobei die Dosierpumpe (1) vorzugsweise in Form einer Kolben-Zylinder-Anordnung ausgeführt ist,
**gekennzeichnet durch**
eine Pumpenaufnahmeplatte (6), von der die Dosierpumpe (1) getragen wird bzw. die Dosierpumpen (1) getragen werden,
eine zur Pumpenaufnahmeplatte (6) parallel liegende Dosierkanalplatte (7), in der Dosierkanäle (8) angeordnet sind, die der Dosierpumpe (1) bzw. den Dosierpumpen (1) zugeordnet sind.
wobei die Pumpenaufnahmeplatte (6) auf der Unterseite (12) eine plane Fläche aufweist, in der eine Mündungsöffnung (13) der Dosierpumpe (1) angeordnet ist bzw. Mündungsöffnungen (13) der Dosierpumpen (1) angeordnet sind,
wobei die Dosierkanalplatte (7) auf der Oberseite (14) eine an der Unterseite (12) der Pumpenaufnahmeplatte (6) anliegende Fläche aufweist,
wobei in der Fläche an der Oberseite (14) der Dosierkanalplatte (7) zueinander benachbart die Mündungsöffnungen des der Dosierpumpe (1) zugeordneten Dosierkanals (8) und mindestens eines zugeordneten Zuführkanals (15) angeordnet sind und
wobei die Pumpenaufnahmeplatte (6) und die Dosierkanalplatte (7) relativ zueinander verschiebbar und so die Mündungsöffnung (13) der Dosierpumpe (1) bzw. die Mündungsöffnungen (13) der Dosierpumpen (1) wahlweise mit den Mündungsöffnungen der zugeordneten Dosierkanäle (8) oder Zuführkanäle (15) in Überdeckung bringbar ist bzw. sind,
wobei die Flächen an der Unterseite (12) der Pumpenaufnahmeplatte (6) und der Oberseite (14) der Dosierkanalplatte (7) als abdichtend anliegende Dichtflächen ausgebildet sind,
wobei in der Pumpenaufnahmeplatte (6) benachbart zu der entsprechenden Mündungsöffnung (13) jeweils mindestens ein der Dosierpumpe (1) zugeordneter Umwegkanal (16) mit Mündungsöffnungen in der Dichtfläche auf der Unterseite (12) der Pumpenaufnahmeplatte (6) angeordnet ist und
wobei **durch** Relativverschiebung der Pumpenaufnahmeplatte (6) und der Dosierkanalplatte (7) gegeneinander die Mündungsöffnungen des Umwegkanals (16) in eine Stellung bringbar sind, in der der Umwegkanal (16) den zugeordneten Dosierkanal (8) mit dem zugeordneten Zuführkanal (15) verbindet.

2. Dosiervorrichtung nach Anspruch 1, **dadurch gekennzeichnet, daß** die oder zumindest mehrere Zuführkanäle (15) an eine gemeinsame Flüssigkeits-Zuführleitung (17) in der Dosierkanalplatte (7) angeschlossen sind.

3. Dosiervorrichtung nach Anspruch 1 oder 2, **dadurch gekennzeichnet, daß** die Pumpenaufnahmeplatte (6) und die Dosierkanalplatte (7) mittels einer Drehbewegung relativ zueinander verschiebbar sind.

4. Dosiervorrichtung nach Anspruch 1 oder 2, **dadurch gekennzeichnet, daß** die Pumpenaufnahmeplatte (6) und die Dosierkanalplatte (7) mittels einer Linearbewegung relativ zueinander verschiebbar sind.

5. Dosiervorrichtung nach einem der Ansprüche 1 bis 4, **dadurch gekennzeichnet, daß** die Pumpenaufnahmeplatte (6) eine Führungsaufnahme (18) für die abdichtende Führung der Dosierkanalplatte (7) aufweist.

6. Dosiervorrichtung nach einem der Ansprüche 1 bis 5, **dadurch gekennzeichnet, daß** der Umwegkanal (16) als zur Unterseite (12) der Pumpenaufnahmeplatte (6) offene Nut ausgeführt ist und die Mündungsöffnungen einfach von der offenen Seite der Nut gebildet sind.

7. Dosiervorrichtung nach einem der Ansprüche 1 bis 6, **dadurch gekennzeichnet, daß** der Dosierkanal (8) und/oder der Zuführkanal (15) einen als zur Oberseite (14) der Dosierkanalplatte (7) offene Nut ausgebildeten Abschnitt (19) aufweist und die entsprechende Mündungsöffnung einfach von der offenen Seite der Nut gebildet ist.

8. Dosiervorrichtung nach einem der Ansprüche 1 bis 7, **dadurch gekennzeichnet, daß** in der Stellung, in der der Umwegkanal (16) den zugeordneten Dosierkanal (8) mit dem zugeordneten Zuführkanal (15) verbindet, die zugeordnete Mündungsöffnung (13) ebenfalls mit dem Dosierkanal (8) oder dem Zuführkanal (15) verbunden ist.

9. Dosiervorrichtung nach einem der Ansprüche 1 bis 8, **dadurch gekennzeichnet, daß** in der Dosierkanalplatte (7) je Dosierpumpe (1) ein weiterer Kanal angeordnet ist und der zugeordnete Umwegkanal (16) oder ein zugeordneter weiterer Umwegkanal in der Pumpenaufnahmeplatte (6) den weiteren Kanal in bestimmter Relativlage der Platten (6, 7) mit dem zugeordneten Dosierkanal (8) und/oder Zuführkanal (15) verbindet.

10. Dosiervorrichtung nach einem der Ansprüche 1 bis 9, **dadurch gekennzeichnet, daß** in der Dosierkanalplatte (7) oder in der Pumpenaufnahmeplatte (6) auf der Unterseite (12) je Dosierpumpe (1) ein alle dieser Dosierpumpe (1) zugeordneten Mündungsöffnungen ringförmig jedenfalls zum Teil umschließender, als zur Unterseite (12) offene Nut ausgeführter Spülkanal (20) angeordnet ist, in den über einen zugeordneten Spülanschlußkanal (21) Spülflüssigkeit einströmen und am anderen Ende über einen weiteren Spülanschlußkanal (21) wieder abströmen kann.

11. Dosiervorrichtung nach einem der Ansprüche 1 bis 10, **dadurch gekennzeichnet, daß** die Dichtflächen an den Platten (6, 7) an keramischem Material mit hoher Ebenheit ausgebildet sind.

## Claims

1. A dosing device for fluids, in particular for viscous, preferably sterile fluids to be dosed,
with at least one dosing pump (1), preferably with a plurality of dosing pumps (1) to be operated simultaneously, whereby the dosing pump (1) is preferably designed in the form of a piston-cylinder arrangement,
**characterised by**
a pump seating plate (6), by which the dosing pump (1) is carried or the dosing pumps (1) are carried,
a dosing channel plate (7) lying parallel to the pump seating plate (6), in which dosing channel plate there are arranged dosing channels (8) which are assigned to the dosing pump (1) or to the dosing pumps (1),
whereby the pump seating plate (6) has on the underside (12) a plane surface in which there is arranged a mouth opening (13) of the dosing pump (1) or there are arranged mouth openings (13) of the dosing pumps (1),
whereby the dosing channel plate (7) on the upper side (14) has a surface lying adjacent to the underside (12) of the pump seating plate (6),
whereby the mouth openings of the dosing channel (8) assigned to the dosing pump (1) and of at least one assigned feed channel (15) are arranged neighbouring one another in the surface on the upper side (14) of the dosing channel plate (7)
and
whereby the pump seating plate (6) and the dosing channel plate (7) are displaceable relative to one another and thus the mouth opening (13) of the dosing pump (1) or, as the case may be, the mouth openings (13) of the dosing pumps (1) can optionally be made to overlap with the mouth openings of the assigned dosing channels (8) or feed channels (15),
whereby the surfaces at the underside (12) of the pump seating plate (6) and the upper side (14) of the dosing channel plate (7) are designed as sealing surfaces lying tightly adjacent,
whereby at least one bypass channel (16) assigned to the dosing pump (1) and having mouth openings in the sealing surface on the underside (12) of the pump seating plate (6) is arranged in each case in the pump seating plate (6) neighbouring the corresponding mouth openings (13) and
whereby, by means of a relative displacement of the pump seating plate (6) and the dosing channel plate (7) with respect to one another, the mouth openings of the bypass channel (16) can be brought into a position in which the bypass channel (16) connects the assigned dosing channel (8) with the assigned feed channel (15).

2. The dosing device according to claim 1, **characterised in that** the feed channels (15) or at least several thereof are connected to a common liquid feed line (17) in the dosing channel plate (7).

3. The dosing device according to claim 1 or 2, **characterised in that** the pump seating plate (6) and the dosing channel plate (7) are displaceable relative to one another by means of a rotary motion.

4. The dosing device according to claim 1 or 2, **characterised in that** the pump seating plate (6) and the dosing channel plate (7) are displaceable relative to one another by means of a linear motion.

5. The dosing device according to any one of claims 1 to 4, **characterised in that** the pump seating plate (6) has a guide seating (18) for the tight guidance of the dosing channel plate (7).

6. The dosing device according to any one of claims 1 to 5, **characterised in that** the bypass channel (16) is designed as a groove open to the underside (12) of the pump seating plate (6) and the mouth openings are simply formed from the open side of the groove.

7. The dosing device according to any one of claims 1 to 6, **characterised in that** the dosing channel (8) and/or the feed channel (15) has a section (19) formed as a groove open to the upper side (14) of the dosing channel plate (7) and the corresponding mouth opening is simply formed from the open side of the groove.

8. The dosing device according to any one of claims 1 to 7, **characterised in that**, in the position in which the bypass channel (16) connects the assigned dosing channel (8) with the assigned feed channel (15), the assigned mouth opening (13) is also connected with the dosing channel (8) or the feed channel (15).

9. The dosing device according to any one of claims 1 to 8, **characterised in that** a further channel per dosing pump (1) is arranged in the dosing channel plate (7) and the assigned bypass channel (16) or an assigned further bypass channel in the pump seating plate (6) connects the further channel in a certain relative position of the plates (6, 7) with the assigned dosing channel (8) and/or feed channel (15).

10. The dosing device according to any one of claims 1 to 9, **characterised in that** there is arranged in the dosing channel plate (7) or in the pump seating plate (6) on the underside (12), per dosing pump (1), a flushing channel (20) designed as a groove open to the underside (12) and at all events partially surrounding in a ring-shaped manner all the mouth openings assigned to this dosing pump (1), into which flushing channel flushing liquid can flow in via an assigned flushing connection channel (21) and can flow away again at the other end via a further flushing connection channel (21).

11. The dosing device according to any one of claims 1 to 10, **characterised in that** the sealing surfaces on the plates (6, 7) are formed from a ceramic material with a high degree of planeness.

## Revendications

1. Dispositif de dosage pour liquides, notamment pour liquides visqueux, à doser de préférence en milieu stérile,
comportant au moins une pompe de dosage (1), de préférence une pluralité de pompes de dosage (1), à actionner en même temps (1), la pompe de dosage (1) étant de préférence réalisée sous forme d'un agencement piston-cylindre,
**caractérisé par**
une plaque support de pompe (6) qui supporte la pompe de dosage (1) ou qui supporte les pompes de dosage (1),
une plaque à canaux de dosage (7) placée parallèlement à la plaque support de pompe (6), dans laquelle sont disposés des canaux de dosage qui sont associés à la pompe de dosage (1) ou aux pompes de dosage (1),
la plaque support de pompe (6) présentant sur sa face inférieure (12) une surface plane dans laquelle est disposée une ouverture d'embouchure (13) de la pompe de dosage (1) ou sont disposées des ouvertures d'embouchure (13) des pompes de dosage (1),
la plaque à canaux de dosage (7) présentant sur sa face supérieure (14) une surface en contact avec la face inférieure (12) de la plaque support de pompe (6),
les ouvertures d'embouchure du canal de dosage (8) associé à la pompe de dosage (1) et d'au moins un canal d'alimentation associé (15) étant disposées les unes près des autres dans la surface de la face supérieure (14) de la plaque à canaux de dosage (7) et la plaque support de pompe (6) et la plaque à canaux de dosage (7) étant déplaçables l'une par rapport à l'autre et l'ouverture d'embouchure (13) de la pompe de dosage (1) ou les ouvertures d'embouchure (13) des pompes de dosage (1) pouvant ainsi être amenées ou étant en recouvrement au choix avec les ouvertures d'embouchure des canaux de dosage (8) ou canaux d'alimentation associés (15),
les surfaces se trouvant sur la face inférieure (12) de la plaque support de pompe (6) et la face supérieure (14) de la plaque à canaux de dosage (7) étant réalisées sous forme de surfaces d'étanchéité en contact hermétique,
étant disposé, dans la plaque support de pompe (6), à proximité de l'ouverture d'embouchure correspondante (13), respectivement au moins un canal de dérivation (16) associé à la pompe de dosage (1) avec des ouvertures d'embouchure dans la surface d'étanchéité sur la face inférieure (12) de la plaque support de pompe (6) et,
par déplacement relatif de la plaque de support de pompe (6) et de la plaque à canaux de dosage (7) l'une vers l'autre, les ouvertures d'embouchure du canal de dérivation (16) pouvant être amenées dans une position dans laquelle le canal de dérivation (16) relie le canal de dosage associé (8) au canal d'alimentation associé (15).

2. Dispositif de dosage selon la revendication 1, **caractérisé en ce que** les ou au moins plusieurs des canaux d'alimentation (15) sont raccordés à une conduite d'alimentation en liquide commune (17) dans la plaque à canaux de dosage (7).

3. Dispositif de dosage selon la revendication 1 ou 2, **caractérisé en ce que** la plaque support de pompe (6) et la plaque à canaux de dosage (7) sont déplaçables l'une par rapport à l'autre au moyen d'un mouvement de rotation.

4. Dispositif de dosage selon la revendication 1 ou 2, **caractérisé en ce que** la plaque support de pompe (6) et la plaque à canaux de dosage (7) sont déplaçables l'une par rapport à l'autre au moyen d'un mouvement linéaire.

5. Dispositif de dosage selon l'une quelconque des revendications 1 à 4, **caractérisé en ce que** la plaque support de pompe (6) présente un support de guidage (18) pour le guidage hermétique de la plaque à canaux de dosage (7).

6. Dispositif de dosage selon l'une quelconque des revendications 1 à 5, **caractérisé en ce que** le canal de dérivation (16) est réalisé sous forme d'une gorge ouverte vers la face supérieure (12) de la plaque support de pompe (6) et que les ouvertures d'embouchure sont simplement formées par le côté ouvert de la gorge.

7. Dispositif de dosage selon l'une quelconque des revendications 1 à 6, **caractérisé en ce que** le canal de dosage (8) et/ou le canal d'alimentation (15) présente une section (19) réalisée sous forme d'une gorge ouverte vers la face supérieure (14) de la plaque à canaux de dosage (7) et que l'ouverture d'embouchure correspondante est simplement formée par le côté ouvert de la gorge.

8. Dispositif de dosage selon l'une quelconque des revendications 1 à 7, **caractérisé en ce que**, dans la position dans laquelle le canal de dérivation (16) relie le canal de dosage associé (8) au canal d'alimentation associé (15), l'ouverture d'embouchure associée (13) est également reliée au canal de dosage (8) ou au canal d'alimentation (15).

9. Dispositif de dosage selon l'une quelconque des revendications 1 à 8, **caractérisé en ce qu'**est disposé dans la plaque à canaux de dosage (7), sur la face inférieure (12), par pompe de dosage (1), un autre canal et que le canal de dérivation associé (16) ou un autre canal de dérivation associé dans la plaque support de pompe (6) relie l'autre canal, dans une certaine position relative des plaques (6, 7), au canal de dosage associé (8) et/ou au canal d'alimentation (15).

10. Dispositif de dosage selon l'une quelconque des revendications 1 à 9, **caractérisé en ce qu'**est disposé dans la plaque à canaux de dosage (7), sur la face inférieure (12), par pompe de dosage (1), un canal de lavage (20) entourant en forme annulaire en tout cas partiellement toutes les ouvertures d'embouchure associées à cette pompe de dosage (1) et réalisé sous forme d'une gorge ouverte vers la face inférieure (12), dans lequel du liquide de lavage peut affluer par un canal de raccordement de lavage associé (21) et s'écouler à l'autre extrémité par un autre canal de raccordement de lavage (21) .

11. Dispositif de dosage selon l'une quelconque des revendications 1 à 10, **caractérisé en ce que** les surfaces d'étanchéité des plaques (6, 7) sont réalisées en matériau céramique à haute planéité.
